Europäisches Patentamt

European Patent Office

Office européen des brevets

(19)

(11) Veröffentlichungsnummer: **0 054 139**
**B1**

(12) **EUROPÄISCHE PATENTSCHRIFT**

(45) Veröffentlichungstag der Patentschrift:
**30.05.84**

(21) Anmeldenummer: **81108698.2**

(22) Anmeldetag: **22.10.81**

(51) Int. Cl.³: **C 08 F 212/06,** C 08 F 210/14,
C 08 F 220/12, C 09 D 3/727

(54) **Bindemittel für aus der Schmelze zu verarbeitende Beschichtungsstoffe und ihre Verwendung.**

(30) Priorität: **10.12.80 DE 3046476**

(43) Veröffentlichungstag der Anmeldung:
**23.06.82 Patentblatt 82/25**

(45) Bekanntmachung des Hinweises auf die Patenterteilung:
**30.05.84 Patentblatt 84/22**

(84) Benannte Vertragsstaaten:
**DE FR GB NL**

(56) Entgegenhaltungen:
**EP - A - 0 001 779**
**DE - A - 1 110 870**

(73) Patentinhaber: **BASF Aktiengesellschaft,**
**Carl-Bosch-Strasse 38, D-6700 Ludwigshafen (DE)**

(72) Erfinder: **Hambrecht, Juergen, Dr., Werderstrasse 30,**
**D-6900 Heidelberg (DE)**
Erfinder: **Neubert, Gerhard, Dr., Panoramastrasse 11,**
**D-6719 Battenberg (DE)**

EP 0 054 139 B1

## Beschreibung

Die vorliegende Erfindung betrifft Bindemittel für aus der Schmelze anzuwendende Beschichtungsstoffe sowie ihre Verwendung. Diese Bindemittel sind im wesentlichen lösungsmittelfrei und eignen sich insbesondere für Strassenmarkierungsfarben.

Es ist bekannt, thermoplastische Harze lösungsmittelfrei als Bindemittel für Strassenmarkierungsfarben zu verwenden. Die Applikation erfolgt in der Schmelze mit Hilfe eines Ziehschuhes oder durch Spritzen.

Als lösungsmittelfreie Bindemittel für Strassenmarkierungsfarben werden beispielsweise in der japanischen Patentanmeldung 3022/72 Mischungen aus verestertem Kolophoniumharz, Polybuten und Vinylacetat-Copolymeren beschrieben.

Ausserdem ist aus der DE-OS 20 22 677 die Verwendung von Mischungen aus Kolophonium oder Kolophoniumderivaten und höhermolekularen primären Alkoholen, z.B. Stearylalkohol, als Bindemittel für lösungsmittelfreie Strassenmarkierungsfarben bekannt.

Ferner werden als Bindemittel für lösungsmittelfreie Strassenmarkierungsfarben auch Kohlenwasserstoffharze eingesetzt. So sind beispielsweise in der US-PS 3 619 224 Terpen- oder Petrolharze in Kombination mit Phthalimidderivaten als Schmelzmassen für Strassenmarkierungen beschrieben.

Diese bisher gebräuchlichen thermoplastischen Harze zeigen auf Beton nach der Lagerung in Wasser unbefriedigende Haftung. Ausserdem vergilben die Bindemittel, wenn sie einige Stunden auf Verarbeitungstemperaturen von ca. 200°C gehalten werden. Darüber hinaus geben diese lösungsmittelfreien Bindemittel beim Verarbeiten flüchtige Bestandteile ab, die zur Geruchsbelästigung führen und z.T. arbeitshygienisch bedenklich sind.

In der DE-OS 24 07 159 werden Bindemittel mit hoher Hitzevergilbungs- und Witterungsbeständigkeit aber nur begrenzter Blockfestigkeit beschrieben. Diese Produkte benötigen deshalb eine verhältnismässig kostspielige Verpackung. Ihre Herstellung und Verarbeitung ist aufwendig, weil sowohl ihr Bindemittel als auch die fertigen Massen vor ihrer Verarbeitung verkleben und verblocken.

Strassenmarkierungsfarben oder andere Beschichtungsmassen, die aus der Schmelze appliziert werden, sollen im Temperaturbereich von 120 bis 200°C eine möglichst niedrige Viskosität aufweisen, damit eine problemlose und schnelle Verarbeitung möglich wird. Die Schmelzmasse soll erst oberhalb 70–80°C erweichen, damit daraus hergestellte Markierungen und Beschichtungen bei warmer Witterung verformungsbeständig bleiben und nicht verschmutzen. Die Markierungsmassen sollen eine möglichst hohe Haftung auf allen im Strassenbau verwendeten Materialien aufweisen. Dies ist besonders schwer zu erreichen, wenn die Massen in dünnen Schichten, wie z.B. im Spritzverfahren verarbeitet werden. Die Markierungen müssen witterungsbeständig sowie gegen Wasser und Salzwasser beständig sein. Sie sollen ferner ein hohes Pigmentbindevermögen aufweisen, damit möglichst hohe Anteile kostengünstiger Füllstoffe eingesetzt werden können. Die Adhäsion zu Glasperlen und harten Füllstoffen muss hoch sein, damit die Nachtsichtbarkeit, die Abriebfestigkeit und die Griffigkeit der Markierungen über eine möglichst lange Gebrauchsdauer erhalten bleibt. Ausserdem muss das Bindemittel der Markierungsfarbe bzw. -masse eine hohe Kohäsion und eine ausreichende Elastizität vermitteln, damit die Markierungen abriebfest sind und auch bei kalter Witterung nicht spröde werden und Risse bilden.

In der DE-OS 27 49 625 werden Bindemittel auf Basis von Styrolpolymeren beschrieben, die sich gegenüber denen, die in der DE-OS 24 07 159 beschrieben sind, durch höhere Blockfestigkeit und gleichzeitig bessere mechanische Eigenschaften auszeichnen. Sie erfüllen daher noch besser die Forderungen nach hoher Abreibebeständigkeit, Haftfestigkeit, hoher Schlagfestigkeit und Druckfestigkeit.

Mit ihnen lassen sich in Kombination mit schwerflüchtigen Weichmachern Markierungsfarben mit besonders guten mechanischen Eigenschaften bei hohen und tiefen Temperaturen und daher hoher Verschleissfestigkeit und Haltbarkeit sowie hoher Druckfestigkeit und Verschmutzungsresistenz im Verkehr herstellen.

Es hat sich nun gezeigt, dass sowohl die in der DE-OS 24 07 159 wie auch die in der DE-OS 27 49 625 beschriebenen Bindemittel nicht immer alle in der Praxis gestellten Forderungen für die Verarbeitung in Markierungsmassen aus der Schmelze optimal erfüllen. Ein besonderes Problem stellt dar, dass die Massen schon bei möglichst niedriger Temperatur verarbeitet werden sollen, um Energie zu sparen und die Bildung flüchtiger, übelriechender Zersetzungsprodukte beim langzeitigen Erhitzen auf hohe Temperaturen zu verhindern. Die Verarbeitbarkeit der Massen bei tiefen Temperaturen zwischen etwa 140 und 200°C ist besonders beim Spritzen nur schwer zu erreichen, weil hierzu die Schmelzviskosität der Massen besonders niedrig sein muss. Dies ist nur erreichbar, wenn der Pigment/Füllstoffanteil der Massen sehr niedrig eingestellt wird und damit geringere Wärmedruckfestigkeit, geringere Verschmutzungsresistenz und höhere Rohstoffkosten in Kauf genommen werden oder das Molekulargewicht bzw. die Schmelzviskosität des Bindemittels beträchtlich gesenkt werden. Der an sich günstigere und daher in der Praxis vorzuziehende letztere Weg ist jedoch bei den Bindemitteln der obengenannten DE-OS nicht beliebig gangbar, weil sich die gewünschten niedermolekularen Bindemittel nach den bekannten Verfahren nicht ohne schwerwiegende Nachteile herstellen lassen. Zur Senkung des Molekulargewichts müssen die bekannten Regler, wie z.B. Merkaptane oder sehr hohe Anteile Initiatoren, zur Herstellung der Polymerisate eingesetzt werden. Das bedingt jedoch, dass derartig hergestellte Bindemittel nicht mehr die gewünschte Hitzevergilbungsbeständigkeit besitzen. Ausserdem wirkt sich der Einsatz solcher Hilfsstoffe nachteilig auf den Geruch und die Flüchtigkeit der Massen bei langzeitiger Erhitzung aus.

Es bestand also die Aufgabe, ein Bindemittel herzustellen, das die obigen Nachteile nicht aufweist und die z.T. widersprüchlichen Eigenschaftsanforderungen in optimaler Weise in sich vereint. Insbesondere sollte das Bindemittel eine sehr niedrige Schmelzviskosität bei gleichzeitig hoher Erweichungstemperatur und nur geringen flüchtigen Bestandteilen aufweisen. Die Polymerisation sollte so durchgeführt werden, dass die Bildung übelriechender Bestandteile vermieden wird. Ausserdem sollte das Herstellverfahren gegenüber den obengenannten diskontinuierlichen Verfahrenskosten günstiger gestaltet werden.

Gegenstand der vorliegenden Erfindung sind Bindemittel für aus der Schmelze zu verarbeitende Beschichtungsstoffe, die dadurch gekennzeichnet sind, dass das Bindemittel durch kontinuierliche Copolymerisation von

(a) 90–98 Gew.% eines α-olefinisch ungesättigten Kohlenwasserstoffs mit 8 bis 12 Kohlenstoffatomen und/oder eines Esters einer 3 bis 5 Kohlenstoffatome enthaltenden α,β-olefinisch ungesättigten Carbonsäure mit 1 bis 14 Kohlenstoffatome enthaltenden Monoalkanolen,
(b) 2–10 Gew.% mindestens einer copolymerisierbaren olefinisch ungesättigten Mono- und/oder Dicarbonsäure und/oder eines Dicarbonsäureanhydrids und/oder eines Halbesters einer α,β-olefinisch ungesättigten Dicarbonsäure mit 1–8 Kohlenstoffatome enthaltenden Monoalkanolen
und gegebenenfalls
(c) 0–8 Gew.% eines Hydroxylgruppen enthaltenden copolymerisierbaren α,β-olefinisch ungesättigten Monomeren

ohne Radikalinitiatoren und Regler bei Temperaturen von 280 bis 400°C und einer Verweilzeit von 2 bis 60 Minuten in Masse hergestellt worden ist.

Die erfindungsgemässen Bindemittel besitzen vorzugsweise einen K-Wert (nach DIN 53726; 1%ig in Ethylacetat) von 10 bis 20 und einen Erweichungspunkt (DIN 53180) zwischen 60 bis 150°C.

Die erfindungsgemässen Bindemittel haben gegenüber den bisher für Heissschmelzmarkierungsmassen bekannten Bindemitteln den Vorteil, dass sich mit ihnen hitze- und lichtvergilbungsbeständige Massen herstellen lassen, die sich schon bei besonders niedriger Temperatur, mit besonders niedriger Schmelzviskosität und gleichzeitig besonders geringer Geruchsbelästigung verabeiten lassen. Durch ihre besonders niedrige Schmelzviskosität ermöglichen sie eine besonders gute Verankerung auf der Strassenoberfläche und anderen Untergründen selbst dann noch, wenn sie in verhältnismässig dünnen Schichten angewendet werden, wie z.B. beim Verarbeiten durch Spritzen.

Massen auf dieser Basis lassen sich mit besonders hohen Anteilen anorganischer Füllstoffe und Pigmente pigmentieren. Sie sind daher besonders wirtschaftlich. Ausserdem lassen sich mit ihnen ggf. unter Mitverwendung schwer flüchtiger Weichmacher Markierungen mit verhältnismässig günstigen mechanischen Eigenschaften, wie guter Kälterissbeständigkeit, Wärmeverformungsbeständigkeit und Verschleissfestigkeit im Strassenverkehr herstellen.

Der hohe Erweichungspunkt der Bindemittel ermöglicht die Herstellung einfach zu handhabender, rieselfähiger, lagerfähiger Bindemittel-Füllstoffmischungen für die direkte Verarbeitung an der Strasse durch Aufschmelzen und Aufziehen bzw. Verspritzen der Schmelze.

Das kontinuierliche Herstellverfahren für die erfindungsgemässen Bindemittel zeichnet sich durch wesentlich geringeren Aufwand im Vergleich zu den in den DE-OS 24 07 154 und 27 49 625 beschriebenen Verfahren aus, da sich einerseits durch die starter- und reglerfreie Fahrweise, andererseits durch den reduzierten Energiebedarf der Hochtemperaturpolymerisation eine wesentliche Kosteneinsparung ergibt. Die kontinuierlich hergestellten Bindemittel zeichnen sich ausserdem durch eine konstante Produktqualität aus, so dass Chargenschwankungen vermieden werden.

Zu den Aufbaukomponenten des erfindungsgemäss als Bindemittel zu verwendenden Copolymerisats ist folgendes auszuführen:

(a) Als α-olefinisch ungesättigte Kohlenwasserstoffe mit 8 bis 12 Kohlenstoffatomen eignen sich insbesondere aromatisch substituierte Olefine wie Styrol, α-Methylstyrol, Vinyltoluol, tert.-Butylstyrol und halogensubstituierte Styrole. In gleicher Weise Iönnen aber auch α-Olefine wie Diisobuten, Dodecen, Octadecen eingesetzt werden. Als Ester einer 3 bis 5 Kohlenstoffatome enthaltenden α,β-olefinisch ungesättigten Carbonsäure mit 1 bis 14 Kohlenstoffatome enthaltenden Monoalkanolen kommen in Frage Ester von Monocarbonsäuren, wie Acrylsäure, Methacrylsäure und Crotonsäure sowie Diester von Dicarbonsäuren, wie Malein-, Fumar-, Itaconsäure. Geeignete Ester der Methacrylsäure mit 1 bis 4 Kohlenstoffatomen sind beispielsweise Methylmethacrylat, Ethylacrylat, Butylacrylat und bei den α,β-olefinisch ungesättigten Carbonsäureestern mit 5–14 Kohlenstoffatomen werden bevorzugt Hexyl-, 2-Ethylhexyl-, Octyl- und Laurylester der Acrylsäure bzw. Methacrylsäure eingesetzt.

Besonders bevorzugt werden Styrol, α-Methylstyrol sowie Methylmethacrylat, Butylacrylat und 2-Ethylhexylacrylat sowie Mischungen derselben, z.B. Styrol, Butylacrylat und 2-Ethylhexylacrylat.

Die Monomeren der Komponente (a) sind im erfindungsgemässen Bindemittel in Mengen von 90–98 Gew.%, vorzugsweise 92–96 Gew.%, einpolymerisiert.

(b) Als Komponente (b) kommen $\alpha,\beta$-olefinisch ungesättigte copolymerisierbare Carbonsäuren, wie Mono- und Dicarbonsäuren mit 3 bis 5 Kohlenstoffatomen, z.B. Acrylsäure, Methacrylsäure, Crotonsäure, Maleinsäure, Fumarsäure und Itaconsäure, sowie Dicarbonsäuremonoester in Frage, wie die Halbester von Maleinsäure und Fumarsäure mit 1 bis 18 Kohlenstoffatomen enthaltenden Monoalkanolen, wie z.B. Malein- oder Fumarsäuremonomethyl-, -ethyl-, -propyl-, -n-butyl-, -iso-butyl-, -hexyl-, -octyl-, -n-decyl-, -iso-decyl-, -lauryl-, -stearyl- und -ethylhexylester. Besonders bevorzugt sind Maleinsäure-n-butyl-, -iso-butyl- und -iso-decylhalbester. Desgleichen eignen sich Gemische der genannten ungesättigten Carbonsäuren und Dicarbonsäuremonoester. Schliesslich kann auch Maleinsäureanhydrid allein oder in Kombination mit den obengenannten Monomeren eingesetzt werden.

Die Komponente (b) ist im erfindungsgemässen Bindemittel in Mengen von 2–10, vorzugsweise 4–8 Gew.% einpolymerisiert.

(c) Gegebenenfalls kann als Komponente (c) ein hydroxylgruppenhaltiges copolymerisierbares Monomeres, wie z.B. Allylalkohol, Hydroxyethylacrylat oder Hydroxypropylacrylat einpolymerisiert werden.

Monomere der Komponente (c) sind gegebenenfalls in Mengen bis zu 8 Gew.%, vorzugsweise bis zu 5 Gew.% im erfindungsgemässen Bindemittel einpolymerisiert.

Beispiele für bevorzugt als Bindemittel geeignete Copolymerisate sind Mischpolymerisate aus 95 Gew.% eines Gemischs aus Styrol und n-Butylacrylat im Verhältnis 5:1 und 5 Gew.% Acrylsäure. Es können aber auch weitere Monomere einpolymerisiert sein. Beispielsweise können bevorzugt auch Copolymerisate aus Styrol, $\alpha$-Methylstyrol, n-Butylacrylat, Acrylsäure und Maleinsäureanhydrid oder aus Maleinsäureanhydrid, Diisobuten, iso-Butylacrylat, Hydroxypropylacrylat eingesetzt werden. Es sind aber auch die reinen Co- bzw. Terpolymerisate aus Styrol und Acrylsäure bzw. Styrol, Acrylsäure und Hydroxypropylacrylat geeignet.

Überraschenderweise können nach dem erfindungsgemässen kontinuierlichen Verfahren Bindemittel mit K-Werten zwischen 10 und 20 hergestellt werden, ohne dass dafür Radikalinitiatoren und Regler notwendig sind. Der bevorzugte K-Wert-Bereich der erfindungsgemässen Bindemittel liegt zwischen 12 und 18. Die erfindungsgemässen Bindemittel und daraus hergestellte Beschichtungsmassen weisen sehr niedrige Schmelzviskositäten auf.

Trotz des niedrigen Molekulargewichts und der sehr niedrigen Schmelzviskosität ist die Erweichungstemperatur der erfindungsgemässen Bindemittel überraschenderweise nicht herabgesetzt. Vielmehr liegt der Erweichungspunkt der erfindungsgemässen Bindemittel (nach KSN = Krämer-Sarnow-Nagel) über 50°C, vorzugsweise zwischen 65 und 150°C, insbesondere zwischen 70 und 120°C.

Darüber hinaus gelingt es mit Hilfe des erfindungsgemäss anzuwendenden Verfahrens, Bindemittel herzustellen, die zudem der Forderung genügen, nur noch minimale Mengen flüchtiger Bestandteile während der Verarbeitung bei Temperaturen um 200°C abzugeben. Diese Eigenschaftskombination aus niedrigem Molekulargewicht, niedriger Schmelzviskosität, bei gleichzeitig höchsten Anforderungen genügenden hohen Erweichungstemperaturen und niedrigen flüchtigen Anteilen war für die erfindungsgemäss kontinuierlich hergestellten Bindemittel nicht zu erwarten.

Zu dem für die Herstellung der erfindungsgemässen Bindemittel erforderlichen kontinuierlichen Polymerisationsverfahren ist folgendes auszuführen:

Als Polymerisationsapparatur kann z.B. ein Druckkessel, eine Druckkesselkaskade, ein Druckrohr oder auch ein Druckkessel mit einem nachgeschalteten Reaktionsrohr, das mit einem statischen Mischer versehen ist, verwendet werden. Vorzugsweise polymerisiert man die Monomeren (a), (b) und (c) in mindestens zwei hintereinander geschalteten Polymerisationszonen. Dabei kann die eine Reaktionszone aus einem druckdichten Kessel, die andere aus einem druckdichten Reaktionsrohr, vorzugsweise einem beheizbaren statischen Mischer bestehen. Wenn man die Polymerisation in zwei hintereinander geschalteten Zonen durchführt, erhält man Umsätze, die oberhalb 99% liegen. Während der Polymerisation muss für eine gute Durchmischung der Komponenten gesorgt werden, beispielsweise verwendet man druckdichte Kessel, die mit einem Rührer ausgestattet sind, oder Polymerisationsrohre mit statischen Mischern.

Die Copolymerisation wird kontinuierlich und in Abwesentheit von radikalbildenden Initiatoren durchgeführt. Ein Copolymerisat aus Styrol, Acrylsäure und Maleinsäureanhydrid kann beispielsweise dadurch hergestellt werden, dass man die Monomeren einem Reaktor oder zwei hintereinander geschalteten Polymerisationszonen, beispielsweise einer Druckkesselkaskade, kontinuierlich zuführt und nach einer Verweilzeit von 2 bis 60, vorzugsweise 5 bis 30 Minuten, bei Temperaturen zwischen 280 und 400°C kontinuierlich aus der Reaktionszone ausschleust. Die Einhaltung dieser Temperaturgrenzen ist wichtig, da bei Unterschreiten die Verweilzeiten zu lang und die Molgewichte zu hoch werden, während bei Überschreitung thermische Zersetzungsprozesse eintreten können. die Raum-Zeit-Ausbeuten liegen im allgemeinen zwischen 1 und 50 kg Polymerisat pro Liter und Stunde.

Die Polymerisation wird bei Drücken von >1 bar, vorzugsweise zwischen 1 und 200 bar durchgeführt. Besonders gute Ergebnisse erhält man, wenn man die Polymerisationsreaktion bei periodischen Druckschwankungen mit Druckdifferenzen zwischen 5 und 120 bar durchführt und anschliessend ebenfalls bei periodischen Druckschwankungen mit denselben Druckdifferenzen entspannt. Diese Massnahme, die eine pulsierende Strömung des Reaktionsguts zur Folge hat, bewirkt eine Selbstreinigung des Reaktors und verhindert produktschädigende Wandbeläge und Anbackungen im Reaktor. Der Produktaustrag ist homogen und enthält keine Stippen oder gecracktes Material.

Unter kontinuierlicher Polymerisation soll auch eine Arbeitsweise verstanden werden, bei der in einer Polymerisationszone, z.B. in einem Kessel, zunächst etwa 10% der Monomeren-Mischung vorgelegt werden und bei der man dann anschliessend den Rest der Monomeren-Mischung kontinuierlich im Verlauf von 30 bis 300 Minuten zulaufen lässt. Bei dieser Verfahrensvariante liegen jedoch die Raum-Zeit-Ausbeuten nicht so hoch wie bei dem kontinuierlichen Polymerisieren in zwei hintereinander geschalteten Reaktionszonen. Im Gegensatz zu den bekannten Verfahren wird in Abwesenheit eines Lösungsmittels polymerisiert.

Der Feststoffgehalt der nach dem kontinuierlichen Verfahren hergestellten Polymerisate liegt über 99%, in bevorzugten Ausführungsformen über 99,5%. Zur Entfernung der restlichen flüchtigen Anteile, in der Regel handelt es sich um nicht umgesetzte Monomere, kann das Polymerisat auch im Vakuum entgast werden. Hierzu werden bekannte Verdampfungsaggregate, wie Rohrverdampfer, Plattenverdampfer oder Filmextruder eingesetzt. In der Regel ist ein solcher Entgasungsschritt für die Herstellung der erfindungsgemässen Polymerisate jedoch nicht notwendig.

Der Energieaufwand des kontinuierlichen Verfahrens ist aufgrund der kurzen mittleren Verweilzeiten und der hohen Raum-Zeit-Ausbeuten gering. Bei entsprechender Wahl der Monomeren-Zusammensetzung und der Einsatzmenge an Monomeren pro Zeiteinheit reicht die bei der Polymerisation frei werdende Wärmemenge aus, um die für die Polymerisation erforderliche Temperatur aufrechtzuerhalten.

Zur Einstellung der gewünschten mechanischen Eigenschaften können auch Weichmacher mitverwendet werden. Als Weichmacher eignen sich vor allem solche mit geringer Flüchtigkeit bei Verarbeitungstemperatur und einer Erstarrungstemperatur möglichst weit unter 0°C. Beispiele für solche Weichmacher sind Phthalsäureester mit einem Molekulargewicht über 400, wie z.B. die o-Phthalsäureester von n- und iso-Nonyl-, Decyl- und Undecylalkohol sowie deren Gemische. Weniger gut gelatinierende, begrenzt verträgliche und unverträgliche Weichmacher können anteilweise mitverwendet werden: Solche Weichmacher sind z.B. pflanzliche oder tierische Fette und Öle, hochmolekulare Adipinsäure- oder Sebacinsäureester oder mineralische Öle.

Die erfindungsgemässen Bindemittel eignen sich als Bindemittel für aus der Schmelze zu verarbeitende Beschichtungsstoffe, insbesondere für Strassenmarkierungsfarben.

Als Pigmente und Füllstoffe eignen sich die für Strassenmarkierungen üblicherweise verwendeten Stoffe, wie z.B. Anatas, Rutil, Kristobalith, Quarz, Calcit, Dolomit, Muskovitglimmer, Schwerspat, Kieselgur, Glasperlen, Talkum, Bimsmehl und Mischungen dieser Stoffe verschiedener Korngrössenbereiche.

Pigmente und Füllstoffe können je nach gewünschter Anwendung im allgemeinen in Mengen von 60 bis 90 Gewichtsteilen mit 10 bis 40 Gewichtsteilen des erfindungsgemässen Bindemittels kombiniert werden. Den Strassenmarkierungsfarben können ausserdem Hilfsstoffe, wie z.B. Antiabsetzmittel, Haftmittel, Dispergiermittel und Lösungsmittel zugesetzt werden.

Die Herstellung der Markierungsmassen aus den aufgeführten Bestandteilen erfolgt in bekannter Weise unter Verwendung üblicher Mischaggregate, wie z.B. durch Abmischen und Aufschmelzen. Um den Schmelzvorgang zu erleichtern und zu beschleunigen, können die festen Bestandteile in den vorerwärmten Weichmacher eingerührt werden. Die Herstellung der gebrauchsfertigen Schmelze aus den flüssigen und den festen Komponenten kann direkt am Ort der Verarbeitung der Markierungsmasse erfolgen.

Die Verarbeitung der Schmelze erfolgt in bekannter Weise, z.B. durch Verspritzen oder, bei höherviskosen Schmelzen, z.B. durch Aufziehen mit dem Ziehschuh oder Auspressen aus einer Schlitzdüse.

Die in den folgenden Beispielen angegebenen Teile und Prozente sind, soweit nicht anders angegeben, Gewichtsteile bzw. Gewichtsprozente. Das angegebene Molekulargewicht der Bindemittel wurde dampfdruckosmometrisch in Chloroform bei einer Konzentration von 0,1 Gew.% und einer Temperatur von 37°C in einem Mechrolab-Osmometer bestimmt. Der K-Wert wurde 1%ig in Essigester bestimmt (DIN 53726).

Beispiel 1

70 Teile Styrol, 25 Teile iso-Butylacrylat und 5 Teile Acrylsäure werden in einen Druckkessel (Rauminhalt: 1000 Teile) mit nachgeschaltetem Druckrohr doppelten Rauminhalts mittels eines Druckreglers kontinuierlich zudosiert. Das System wurde auf 285°C erhitzt. Der Druck wurde im Bereich zwischen 5 und 50 bar gehalten und einmal innerhalb einer Minute durch eine periodische Druckregelung in diesem Bereich variiert. Die Verweilzeit betrug 11 Minuten; die Copolymerschmelze wurde mengenmässig in dem Masse ausgefahren, wie frische Monomerenmischung zugefahren wurde. Das Copolymerisat wies einen K-Wert von 17,9 auf. Die Kennwerte sind in Tabelle 1 und 2 angegeben.

Beispiel 2

70 Teile Styrol, 25 Teile iso-Butylacrylat und 5 Teile Acrylsäure wurden nach dem in Beispiel 1 beschriebenen Verfahren polymerisiert. Die Polymerisationstemperatur betrug 300°C, der Druck wurde bei 28 bar gehalten. Die Verweilzeit betrug 24 Minuten. Das Copolymerisat hatte einen K-Wert von 11,6. Weitere Kennwerte siehe Tabelle 1 und 2.

Beispiel 3

70 Teile Styrol, 26 Teile iso-Butylacrylat und 4 Teile Acrylsäure wurden wie in Beispiel 1 umgesetzt. Die Polymerisationstemperatur betrug 300°C, der Druck lag bei 40 bar. Die Verweilzeit lag bei 20 Minuten. Die Kenndaten sind Tabelle 1 und 2 zu entnehmen.

Beispiel 4

75 Teile Methylmethacrylat, 16 Teile n-Butylacrylat, 5 Teile Acrylsäure und 4 Teile Maleinsäureanhydrid wurden wie in Beispiel 1 beschrieben polymerisiert. Die Polymerisationstemperatur betrug 290°C, der Druck wurde mit Stickstoff auf 30 bar eingestellt. Die Verweilzeit betrug 20 Minuten, die Raum-Zeit-Ausbeute lag bei 10 kg/l.h. Die Kenndaten des Polymerisats sind in Tabelle 1 zusammengefasst.

Beispiel 5

60 Teile Diisobuten, 30 Teile iso-Butylacrylat, 5 Teile Maleinsäuremonobutylester und 5 Teile Acrylsäure wurden wie in Beispiel 1 beschrieben umgesetzt. Polymerisationstemperatur 280°C, Druck 56 bar, Verweilzeit 48 Minuten, Raum-Zeit-Ausbeute 1,5 kg/l.h. Die Kenndaten sind Tabelle 1 zu entnehmen.

Vergleichsbeispiel A

70 Teile Styrol, 20 Teile iso-Butylacrylat und 10 Teile Maleinsäuremonobutylester wurden wie in der DE-OS 27 49 625 in Beispiel 1 beschrieben unter Zugabe von 2 Teilen tert.-Dodecylmercaptan und 2,25 Teilen tert.-Butylperbenzoat polymerisiert. Die Kenndaten sind in Tabelle 1 und 2 angeführt.

Vergleichsbeispiel B

51,5 Teile Butylacrylat, 46,4 Teile Styrol und 4,14 Teile Acrylsäure wurden gemäss Beispiel 1 der DE-OS 24 07 159 in Gegenwart von 0,5 Teilen tert.-Dodecylmercapten polymerisiert. Das resultierende Bindemittel besitzt die in Tabelle 1 und 2 aufgeführten Kenndaten.

Tabelle 1

|  | Kennwerte der Beispiele 1 bis 5 und der Vergleichsbeispiele A und B | | | | | | |
|---|---|---|---|---|---|---|---|
| Beispiel Nr. | 1 | 2 | 3 | 4 | 5 | A | B |
| K-Wert (DIN 53726) (1%ig in Ethylacetat) | 17,9 | 11,6 | 15 | 13,4 | 12,0 | 20,1 | 19,0 |
| Erweichungspunkt °C (DIN 53180) | 103 | 90 | 95 | 95 | 90 | 106 | 62 |
| Gewichtsverlust (%) (5 h/200°C, 20 g/50 cm² Einwaage) | 1,9 | 2,5 | 1,5 | 1,8 | 2,5 | 2,9 | 4,8 |
| Schmelzviskosität (Pa.s) | | | | | | | |
| bei 150°C | 55 | 9 | 30 | 23 | 13 | 75 | 3,0 |
| bei 180°C | 11 | 2 | 8 | 4 | 2,5 | 14 | 0,8 |

Beispiel 6

100 Teile des Mischpolymerisats aus den Beispielen 1–3 und den Vergleichsbeispielen A und B wurden mit den in Tabelle 2 angegebenen Mengen Diisodecylphthalat zu einer einheitlichen Schmelze vermischt. Die Kenndaten der erhaltenen Schmelze sind in Tabelle 2 zusammengefasst.

Tabelle 2

|  | Kennwerte der modifizierten Harze | | | | |
|---|---|---|---|---|---|
| Beispiel Nr. | 1 | 2 | 3 | A | B |
| Zusatz von Weichmacher (%) (Diisodecylphthalat) | 30 | 16 | 25 | 32 | 0 |
| Schmelzviskosität (Pa.s) | | | | | |
| bei 150°C | 1,8 | 0,5 | 1,0 | 2,0 | 3,0 |
| bei 180°C | 0,65 | 0,20 | 0,45 | 0,8 | 0,8 |
| Shore-Härte A, 23°C (15 s Belastung) | 50 | 50 | 50 | 50 | 40 |
| Schlagfestigkeit bei 23°C (Fallhöhe eines Rundbolzens von 109 g in cm) | >30 | >20 | >25 | >25 | >8 |

Die Ergebnisse der Tabellen 1 und 2 machen deutlich, das nach dem erfindungsgemässen Verfahren, verglichen mit den bekannten Verfahren, besonders niedrigviskos schmelzende Polymerisatharze herstellbar sind, die auch nach dem Plastifizieren bis zum Erreichen gleicher Eindringhärte sehr viel niedrigviskoser schmelzen und dennoch gute Schlagfestigkeitswerte aufweisen.

Beispiel 7

Herstellung einer lösungsmittelfreien, verspritzbaren Heissschmelzmarkierungsmasse.

22 Teile des Bindemittel-Weichmacher-Gemisches aus Beispiel 6 werden bei Temperaturen zwischen 160 und 200°C aufgeschmolzen und mit

10 Teilen Anatas
38 Teilen Calcit-Mischung (0,001 bis 0,7 mm Korndurchmesser)
10 Teilen Kristobalit (Korndurchmesser 0,02 bis 0,2 mm)
20 Teilen Reflex-Glasperlen (0,2 bis 0,4 mm Korndurchmesser)

durch intensives Rühren gleichmässig bei dieser Temperatur durchgemischt.

Die so hergestellten pigmentierten Massen zeichnen sich im Vergleich zu einer analog hergestellten Markierungsmasse aus Vergleichsprodukt A durch niedrigere Schmelzviskosität aus. Sie lassen sich daher schon bei tieferen Temperaturen nach den bekannten Verfahren, wie z.B. Verspritzen oder Aufziehen, verarbeiten.

## Patentansprüche

1. Bindemittel mit verbesserter Hitze- und Lichtvergilbungsbeständigkeit für aus der Schmelze zu verarbeitende Beschichtungsstoffe, dadurch gekennzeichnet, dass das Bindemittel durch kontinuierliche Copolymerisation von

(a) 90–98 Gew.% eines α-olefinisch ungesättigten Kohlenwasserstoffs mit 8 bis 12 Kohlenstoffatomen und/oder eines Esters einer 3 bis 5 Kohlenstoffatome. enthaltenden α,β-olefinisch ungesättigten Carbonsäure mit 1 bis 14 Kohlenstoffatome enthaltenden Monoalkanolen,
(b) 2–10 Gew.% mindestens einer copolymerisierbaren olefinisch ungesättigten Mono- und/oder Dicarbonsäure und/oder eines Dicarbonsäureanhydrids und/oder eines Halbesters einer α,β-olefinisch ungesättigten Dicarbonsäure mit 1–8 Kohlenstoffatome enthaltenden Monoalkanolen und gegebenenfalls
(c) 0–8 Gew.% eines Hydroxylgruppen enthaltenden copolymerisierbaren α,β-olefinisch ungesättigten Monomeren

ohne Radikaliinitiatoren und Regler bei Temperaturen von 280 bis 400°C und einer Verweilzeit von 2 bis 60 Minuten in Masse hergestellt worden ist.

2. Bindemittel nach Anspruch 1, dadurch gekennzeichnet, dass das Copolymerisat einen K-Wert nach DIN 53726 (1%ig in Ethylacetat) zwischen 10 und 20 aufweist.

3. Bindemittel nach Anspruch 1, dadurch gekennzeichnet, dass das Copolymerisat einen Erweichungspunkt nach DIN 53180 zwischen 60 und 150°C aufweist.

4. Verwendung des Bindemittels nach einem der vorhergehenden Ansprüche als Bindemittel in Strassenmarkierungsfarben.

## Claims

1. A binder, exhibiting improved resistance to heat and yellowing in light, for coating materials to be processed from the melt, the binder having been obtained by continuous mass copolymerization of

(a) 90 to 90% by weight of an α-olefinically unsaturated hydrocarbon of 8 to 12 carbon atoms and/or an ester of an α,β-olefinically unsaturated carboxylic acid of 3 to 5 carbon atoms with a monoalkanol of 1 to 14 carbon atoms, and
(b) 2 to 10% by weight of at least one copolymerizable olefinically unsaturated nono- and/or dicarboxylic acid and/or dicarboxylic acid anhydride and/or half-ester of an α,β-olefinically unsaturated dicarboxylic acid with a monoalkanol of 1 to 8 carbon atoms, with or without
(c) 0 to 8% by weight of a hydroxyl-containing copolymerizable α,β-olefinically unsaturated monomer,

in the absence of free-radical initiators and regulators at a temperature of from 280 to 400°C and a residence time of from 2 to 60 minutes.

2. A binder as claimed in claim 1, wherein the copolymer has a K value according to DIN 53,726 (measured on a 1% strength solution in ethyl acetate) of from 10 to 20.

3. A binder as claimed in claim 1, wherein the copolymer has a softening point according to DIN 53,180 of from 60 to 150°C.

4. The use of a binder as claimed in any of the preceding claims as a binder in road-marking paints.

## Revendications

1. Liant de résistance améliorée au jaunissement à la chaleur et la lumière, pour matière d'enduction à traiter à partir d'une masse fondue, caractérisé par le fait que le liant a été préparé par copolymérisation continue de

(a) 90–98% en poids d'un hydrocarbure à insaturation α-oléfinique, de 8 à 12 atomes de carbone et/ou d'un ester d'acide carboxylique, à insaturation α,β-oléfinique, contenant 3 à 5 atomes de carbone avec des monoalcanoles contenant 1 à 14 atomes de carbone,
(b) 2–10% en poids d'au moins un acide mono- et/ou dicarboxylique, à insaturation oléfinique, copolymérisable et/ou d'un acide dicarboxylique et/ou d'un anhydride d'acide dicarboxylique et/ou d'un semi-ester d'un diacide carboxylique à insaturatoin α,β-oléfinique avec des monoalca-

noles contenant 1 à 8 atomes de carbone
et éventuellement

(c) 0–8% en poids d'un monomère à insaturation α,β-oléfinique, copolymérisable, contenant des groupes hydroxyle,

sans excitant radicalaire et régulateur, à des températures de 280 à 400°C et un temps de séjour de 2 à 60 minutes dans la masse.

2. Liant selon la revendication 1, caractérisé par le fait que le copolymérisat possède un indice H selon DIN 53726 (à 1% dans l'acétate d'éthyle) compris entre 10 et 20.

3. Liant selon la revendication 1, caractérisé par le fait que le copolymérisat possède un point de ramollissement, selon DIN 53180, compris entre 60 et 150°C.

4. Utilisation du liant selon l'une des revendications 1 à 3, comme liant pour peinture de marquage sur les routes.